# EUROPEAN PATENT APPLICATION

(11) **EP 3 225 884 A1**
(43) Date of publication of application: **04.10.2017**
(21) Application number: 16382143.2
(22) Date of filing: 31.03.2016
(51) Int. Cl.: F16H 59/08, F16H 61/22

(54) **ROTARY SHIFTER DEVICE**

(71) Applicant: Fico Triad, S.A., 08028 Barcelona (ES)
(72) Inventor: GIMENO GRANÉ, Santiago, 08232 Viladecavalls (ES); DOMINGUIS BOTELLA, Marc, 08232 Viladecavalls (ES)
(74) Representative: ZBM Patents - Zea, Barlocci & Markvardsen

(57) **Abstract**

A shifter device (100) for operating a transmission of a vehicle is provided comprising gear selection knob (10) rotatable between angular positions for selecting a gear shift position (P, R, N, D) of the vehicle transmission and having a flange (11); a cam (20) driven by a gearwheel (21) and having a flange driving portion (25); and a locking pawl (30) rotatable between a locking position, as the cam (20) is rotated in a first direction of rotation (A), in which it engages and locks the flange (11) of the gear selection knob (10) in a specific gear shift position (P, R, N, D), and an unlocking position, as the cam (20) is rotated in a second direction of rotation (B), in which it releases the flange (11) of the gear selection knob (10) such that the gear selection knob (1) is allowed to be rotated by a user for selecting a gear shift position (P, R, N, D). The flange driving portion (25) of the cam (20) is arranged to drive the flange (11) of the gear selection knob (10) towards engagement with the locking pawl (30) when the cam (20) is rotated in the first direction of rotation (A).

## Description

The present disclosure relates to devices for operating vehicle transmissions, and more specifically to electronic shifter devices for operating vehicle transmissions of the type comprising a rotatable gear selection knob.

### BACKGROUND

Rotary shifter devices for operating vehicle transmissions are known in the art. Such devices do not make use of control cables for performing gearshifting operations to control the vehicle transmission but electronic signals.

Both in cable-driven and electronic shifter devices, although most commonly in cable-driven shifter devices, the shifter device should always be in the parking position in order to start the vehicle. For driving the transmission out of the parking position, the user has to perform an operation in addition to operate the shifter device such as for example pressing the brake pedal so that the shifter device is unlocked. The shifter device can be then driven into the desired gearshift position. When the vehicle is to be parked, the shifter device sometimes is not driven again into the parking position by the user so that it is thus required that this function is performed automatically.

The electronic shifter devices usually include an auto park function for automatically shifting the vehicle transmission into the parking gearshift position such that the parking brake is engaged automatically from any gearshift position.

For example, EP2975300 describes a rotary knob switching device for a vehicle transmission that can be rotatably moved to a parking position through a rotary unit when the ignition is turned off.

WO2009018823 describes a rotary knob shifting device for controlling a vehicle transmission including a park lock actuating element which is an additional element for activating the park lock which is released if the knob is moved out of the parking lock position.

Both documents fail to provide a combined parking lock function and an auto park function for operating a vehicle transmission. There is thus a need for a shifter device having both parking lock and auto park functions which are efficiently performed through a single and simple assembly.

### SUMMARY

A shifter device is herein provided with which the above mentioned need is met while providing a number of additional advantages.

The present shifter device comprises a gear selection knob, a cam and a locking pawl.

The gear selection knob is a rotating part, rotatable by a user between a plurality of angular positions for selecting a gear shift position of the vehicle transmission, such as for example, parking (P), reverse (R), neutral (N), drive (D), etc. The gear selection knob has a flange formed therein or attached thereto which will be described further below.

The cam is driven by a gearwheel. Both the cam and the gearwheel may be formed integrally or may be separate parts. The cam is provided with a flange driving portion which will be also described further below.

The locking pawl is arranged to rotate between a locking position and an unlocking position. A spring mechanism such as a torsion spring may be provided to urge the locking pawl into said locking position. The locking pawl is rotated into the locking position as the cam is rotated in a first direction of rotation in which it engages and locks the above mentioned flange of the gear selection knob in a specific one of said gear shift positions. The locking pawl is rotated into an unlocking position as the cam as the cam is rotated in a second direction of rotation in which it releases the above mentioned flange of the gear selection knob such that the gear selection knob is allowed to be rotated by a user for selecting a desired gear shift position (P, R, N, D).

It may be preferred that the flange of the gear selection knob and the locking pawl comprise mutually cooperating surfaces for a ratchet-like engagement with each other. More specifically, it may be preferred that the locking pawl has a first and second pawl portions and the flange of the gear selection knob has a first flange portion. Thus, the first pawl portion and the first flange portion comprise said mutually cooperating surfaces for a ratchet-like engagement with each other as the cam is rotated in the first direction. Specifically, the first pawl portion and the first flange portion both have rounded surfaces that in one relative direction of movement they are locked to each other. On the other hand, the second pawl portion is adapted to slide on the cam depending on the direction of rotation thereof.

In examples of the present shifter device, the gear selection knob may have a second flange portion. Such second flange portion would be adapted to be driven by the flange driving portion of the cam. Thus, the above mentioned flange driving portion of the cam may comprise a projection formed therein adapted to suitably contact the second flange portion of the gear selection knob towards engagement with the locking pawl when the cam is rotated in the first direction of rotation.

The present shifter device may comprise a motor such as a suitable electric motor to drive the gear wheel in rotation and thus the cam according to said directions of rotation. Control means may be also provided for driving the motor according to a predetermined situation, for example, switching off the vehicle ignition when the vehicle is parked. Thus, when such predetermined situation occurs, the gear wheel and thus the cam is driven in rotation causing the gear selection knob to be driven into said one specific gear shift position P, R, N, D, which may be for example at least a parking gear shift position P.

Rotation of the gear wheel by the above mentioned motor can be performed by means of a suitable gear transmission. Such gear transmission may comprise a first worm screw driven by the motor which in turn engages a driving gear wheel, which in turn engages a second worm screw, and which engages the gear wheel.

Additional objects, advantages and features of examples of the present shifter device will become apparent to those skilled in the art upon examination of the description, or may be learned by practice thereof.

### BRIEF DESCRIPTION OF THE DRAWINGS

The present shifter device will be described in the following by way of nonlimiting examples, with reference to the appended drawings, in which:
Figure 1 is a general perspective view of one example of the present shifter device;
Figure 2 is diagrammatic top plan view of the present shifter device shown in a drive gearshift position;
Figure 3 is diagrammatic top plan view of the present shifter device shown driven according to the auto park function; and
Figure 4 is diagrammatic top plan view of the present shifter device shown in a parking gearshift position.

### DETAILED DESCRIPTION OF EXAMPLES

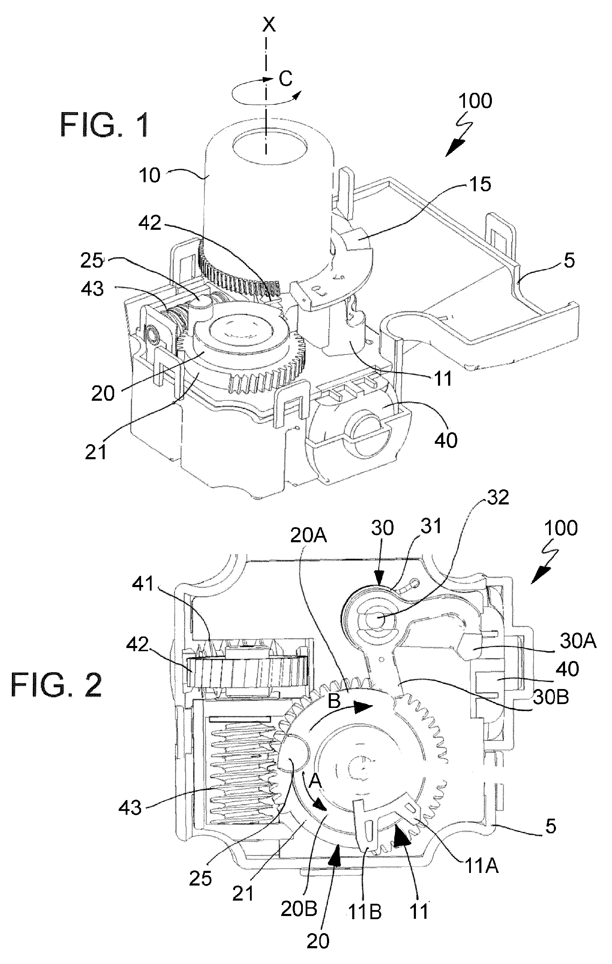

In the non-limiting example shown in the figures 1-4 of the drawings, the shifter device has been designated as a whole by reference numeral 100.

The shifter device 100 shown comprises a housing 5. The housing 5 is depicted in figure 1 with one portion removed in order to make the parts housed therein visible. Partially inside the housing 5, a gear selection knob 10, a cam 20 and a locking pawl 30 are mounted. The locking pawl 30 can only be seen partially in figure 1 and also in figures 2-4.

The gear selection knob 10 is rotatable by a user around an axis X, e.g. a vertical axis, in two directions of rotation as indicated by arrow C in figure 1. Rotation of the gear selection knob 10 allows it to be positioned in a plurality of angular positions for selecting a gear shift position P, R, N, D for controlling the vehicle transmission.

The gear selection knob 10 has a flange 11 extending downwards. The flange 11 of the knob 10 has a first flange portion 11A and a second flange portion 11 B.

An undulated surface 15 is shown in figure 1 arranged so as to be associated with the lower portion of the gear selection knob 10. The undulated surface 15 provides the user with a feeling corresponding to the gear shift position P, R, N, D that is being selected upon rotation of the gear selection knob 10 around axis X.

In the example shown in the figures 1-4, the cam 20 is formed integral with a gearwheel 21. The gearwheel 21 can be rotated by a motor 40 according to a first direction of rotation A, counterclockwise in the drawings, and an opposite, second direction of rotation B, clockwise in the drawings. A gear transmission 41, 42, 43 is provided between the motor 40 and the gearwheel 21 to drive the gearwheel 21 and thus the cam 20. The gear transmission comprises a first worm screw 41 meshing with the motor 40. The first worm screw 41 meshes with a gear wheel 42 in turn meshes with a second worm screw 43 which in turn meshes with the gear wheel 21.

The cam 20 defines a large diameter portion 20A and a small diameter portion 20B on the gearwheel 21, as shown in the figures of the drawings. The cam 20, with its large and small diameter portions 20A, 20B, rotates as the gearwheel 21 is driven by the motor 40.

The cam 20 has a flange driving portion 25 which, in the example shown in the figures, is a projection formed on the gearwheel 21 projecting upwards therefrom. In this case, the flange driving portion 25 is designed such that is higher that the large diameter portion 20A of the cam 20.

The locking pawl 30 has a first pawl portion 30A and a second pawl portion 30B. The locking pawl 30 is arranged to rotate around an axis 32, against a torsion spring 31, between a locking position and an unlocking position. The torsion spring 31 is arranged to urge the locking pawl 30 into said locking position.

Operation of the shifter device 100 is as follows starting from a gearshift position out of the parking position P, for example, from drive position D as shown in figure 2. In this position, the gear selection knob 10 is free to be rotated by the user between a plurality of angular positions for selecting a desired gear shift position P, R, N, D of the vehicle transmission.

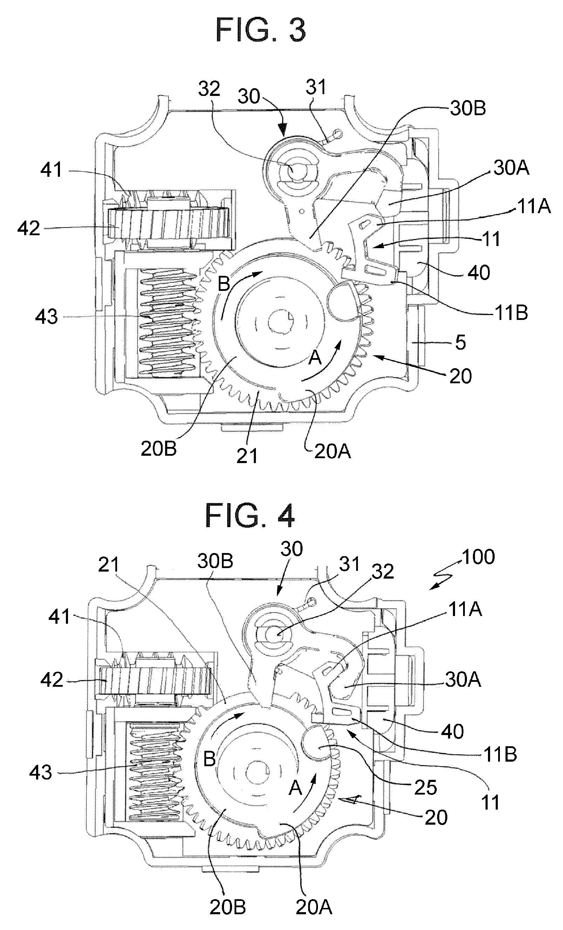

As the gearwheel 21 is rotated in the above mentioned first direction of rotation A, i.e. counterclockwise in the figures, the cam 20 is rotated in said first direction of rotation A until its flange driving portion 25 acts on the second flange portion 11 B of the flange 11 in the gear selection knob 10 as shown in figure 3. This causes the first flange portion 11 B of the flange 11 to be engaged and locked to the first pawl portion 30A of the locking pawl 30. As a result, the gear selection knob 10 is locked against rotation in a specific gearshift position, which in the example described is the parking position P, as shown in figure 4.

To facilitate the above locking and unlocking positions of the gear selection knob 10 to the locking pawl 30, the first pawl portion 30A and the first flange portion 11A in the example shown define mutually cooperating surfaces for a ratchet-like engagement with each other as the cam 20 is rotated by the gearwheel 21 in the first direction of rotation A.

As the gearwheel 21 is rotated in the above mentioned opposite second direction of rotation B, the cam 20 is also rotated in the second direction of rotation B into the unlocking position. During such rotation, the second pawl portion 30B slides on the large diameter portion 20A of the cam 20 causing the locking pawl 30 to be rotated counterclockwise in the drawings releasing the flange 11 of the gear selection knob 10 from the locking pawl 30. This in turn causes the gear selection knob 10 to be release such that it is allowed to be rotated by the user for selecting any desired gear shift position P, R, N, D. Once the flange 11 of the gear selection knob 10 has been released from the locking pawl 30, the cam 20 is preferably rotated in the first direction of rotation A leaving the shifter device 100 in an initial position with the locking pawl 30 in the locking position.

Driving of motor 40 for rotating the gearwheel 21 is controlled through control means, not shown in the drawings. The control means are designed to drive the motor 40 according to the above mentioned predetermined situation, e.g. when the vehicle ignition is switched off, for driving the gear wheel 21 and thus the cam 20 so as to rotate the gear selection knob 10 automatically into the parking position P from any gearshift position.

With the above described shifter device 100, the vehicle transmission is shifted into and out of the parking position P by means of a single and simple assembly while at the same time the vehicle transmission is locked in said parking position P when the vehicle is parked. If the vehicle transmission is detected to be out of the parking position P when the vehicle is parked, the motor 40 is actuated by the above mentioned control means to drive the vehicle transmission into the parking position P. This is thus carried out through the same assembly and the same motor 40 that is used to unlock the knob 10 from the parking position P.

Although only a number of particular examples of the present shifter device have been disclosed herein, it will be understood by those skilled in the art that other alternative examples and/or uses and obvious modifications and equivalents thereof are possible. For example, although actuation of the flange 11 of the gear selection knob 10 by the cam 20 is carried through a flange driving portion 25 formed in the cam 20, the flange 11 of the gear selection knob 10 could instead be driven by a stop portion formed in the large diameter portion 20A of the cam 20. Such stop portion may be for example a transition surface between the large diameter portion 20A and the small diameter portion 20B of the cam 20 such that, as it is rotated in the first direction of rotation A, i.e. counterclockwise in the figures, the flange driving portion 25 acts on said cam transition surface acting on of the flange 11 in the gear selection knob 10 until the flange 11 of the gear selection knob 10 is locked to the locking pawl 30. This causes the gear selection knob 10 to be locked against rotation in the parking position P shown in figure 4.

The present disclosure thus covers all possible combinations of the particular examples described.

Reference signs related to drawings and placed in parentheses in a claim, are solely for attempting to increase the intelligibility of the claim, and shall not be construed as limiting the scope of the claim.

Thus, the scope of the present disclosure should not be limited by particular examples, but should be determined only by a fair reading of the claims that follow.

## Claims

1. A shifter device (100) for operating a transmission of a vehicle, the shifter device comprising:
- gear selection knob (10) rotatable by a user between a plurality of angular positions for selecting a gear shift position (P, R, N, D) of the vehicle transmission, the gear selection knob (10) having a flange (11) attached thereto or formed therein;
- a cam (20) driven by a gearwheel (21), the cam (20) having a flange driving portion (25); and
- a locking pawl (30) arranged to rotate between a locking position, as the cam (20) is rotated in a first direction of rotation (A), in which it engages and locks the flange (11) of the gear selection knob (10) in a specific gear shift position (P, R, N, D), and an unlocking position, as the cam (20) is rotated in a second direction of rotation (B), in which it releases the flange (11) of the gear selection knob (10) such that the gear selection knob (1) is allowed to be rotated by a user for selecting a gear shift position (P, R, N, D);
wherein the flange driving portion (25) of the cam (20) is arranged to drive the flange (11) of the gear selection knob (10) towards engagement with the locking pawl (30) when the cam (20) is rotated in the first direction of rotation (A).

2. The device (100) of claim 1, wherein the flange (11) of the gear selection knob (10) and the locking pawl (30) comprise mutually cooperating surfaces (11A, 30A) for a ratchet-like engagement with each other.

3. The device (100) of claim 2, wherein the locking pawl (30) has a first and second pawl portions (30A, 30B) and the flange (11) of the gear selection knob (10) has a first flange portion (11A), the first pawl portion (30A) and the first flange portion (11A) comprising said mutually cooperating surfaces for a ratchet-like engagement with each other as the cam (20) is rotated and with the second pawl portion (30B) being adapted to slide on the cam (20).

4. The device (100) of any of the preceding claims, wherein the gear selection knob (10) has a second flange portion (11 B) adapted to be driven by the flange driving portion (25) of the cam (20).

5. The device (100) of any of the preceding claims, wherein the cam (20) is formed integral with the gearwheel (21).

6. The device (100) claim 4 or 5, wherein the flange driving portion comprises a projection (25) formed in the cam (20) adapted to contact the second flange portion (11 B) of the gear selection knob (10) towards engagement with the locking pawl (30) when the cam (20) is rotated in the first direction of rotation (A).

7. The device (100) of any of the preceding claims, wherein it comprises a motor (40) to drive the gear wheel (21) in rotation according to said directions of rotation (A, B).

8. The device (100) of any of the preceding claims, wherein a spring mechanism (31) is provided to urge the locking pawl (30) into the locking position.

9. The device (100) of claim 7 or 8, wherein it further comprises control means for driving the motor (40) according to a predetermined situation for driving the gear wheel (21) to drive the cam (20) so as to rotate the gear selection knob (10) into said one specific gear shift position (P, R, N, D).

10. The device (100) of claim 9, wherein said predetermined situation comprises at least switching off the vehicle ignition.

11. The device (100) of any of the preceding claims, wherein said one specific gear shift position (P, R, N, D) where the gear selection knob (10) is locked by the locking pawl (30) is at least a parking gear shift position (P).

12. The device (100) of any of the preceding claims, wherein it further comprises a gear transmission (41, 42, 43) meshed with the motor (40) to rotate the gear wheel (21).

13. The device of claim 12, wherein the gear transmission comprises a first worm screw (41) driven by the motor (40) which in turn engages a driving gear wheel (42) which in turn engages a second worm screw (43) which engages the gear wheel (21).
